# FASCICULE DE BREVET EUROPEEN

(11) **EP 0 484 229 B1**
(45) Date de publication et mention de la délivrance du brevet: **06.08.1997**
(21) Numéro de dépôt: 91402897.2
(22) Date de dépôt: 29.10.1991
(51) Int. Cl.: G01N 29/26, G01N 29/22, G01N 27/90

(54) **Sonde de contrôle de tubes cintrés, à tête de contrôle tournante**
Probe mit drehendem Steuerkopf zum Prüfen gebogener Röhren
Probe with a rotating control head for testing curved pipes

(30) Priorité: 31.10.1990 FR 9013530
(43) Date de publication de la demande: 06.05.1992
(73) Titulaire: COMMISSARIAT A L'ENERGIE ATOMIQUE, 75015 Paris (FR)
(72) Inventeur: Gondard, Christian, F-91360 Epinay sur Orge (FR); Stockmann, Bernard, F-91700 Ste Genevieve des Bois (FR); Viard, Jacky, F-91400 Orsay (FR)
(74) Mandataire: Dubois-Chabert, Guy

(56) Documents cités:
- EP-A- 0 105 418
- EP-A- 0 147 648
- EP-A- 0 255 619
- EP-A- 0 259 669
- EP-A- 0 301 906
- EP-A- 0 318 387
- DE-A- 2 136 259
- DE-A- 2 640 055

## Description

La présente invention concerne une sonde de contrôle de tubes cintrés.

Elle s'applique notamment au contrôle des tubes des échangeurs de chaleur et en particulier au contrôle des tubes des générateurs de vapeur équipant les réacteurs nucléaires.

On connaît déjà des sondes de contrôle de tubes cintrés par les documents suivants :
(1) demande de brevet français n° 75 24698 du 7 Août 1975 (voir aussi US-A-4,153,875)
(2) demande de brevet français n° 83 00692 du 18 janvier 1983 (voir aussi US-A-4,633,177)
(3) GB-A-1 453 189
(4) Inspection of steamgenerator tubes with ultrasonic technique, the NUCON NERASON SYSTEM Document n° 19530-00-003 Issue n°4, août 1987, société Nucon, Pays-Bas.

En particulier, le document (4) décrit une sonde de contrôle de tubes cintrés comportant une tête de sonde qui comprend :
- un traducteur ultrasonore émetteur-récepteur monté de façon fixe sur un premier élément de support,
- un miroir tournant monté sur un deuxième élément de support qui est placé en regard du premier élément de support et qui est relié à celui-ci par une pièce intermédiaire, le miroir permettant le renvoi des ultrasons émis par ce dernier vers un tube à contrôler dans lequel est introduite la sonde, et
- un moteur qui est placé dans le deuxième élément de support et qui entraîne en rotation le miroir.

Cette sonde connue présente deux inconvénients :
a) le faisceau ultrasonore rotatif, issu du miroir, est périodiquement occulté par la pièce qui relie les deux éléments de support, ce qui crée des zones mortes sur la surface interne du tube à contrôler ; pour contourner cette difficulté, la sonde comporte une tête de sonde supplémentaire qui a la même structure que la tête de sonde précédente mais une orientation opposée à celle-ci, de sorte que les zones mortes qu'elle crée se situent à 180° de celles qui sont créées par cette tête de sonde précédente, ce qui conduit à une sonde compliquée ;
b) les inhomogénéités du traducteur-émetteur se traduisent, dans cette structure de tête de sonde connue, par des distorsions sur les signaux de contrôle fournis par la sonde.

La présente invention a pour but de remédier au premier de ces inconvénients et, dans une réalisation particulière, au deuxième inconvénient.

De plus, la présente invention résout le problème de la localisation précise de défauts des tubes dans le sens circonférentiel.

Elle a pour objet une sonde de contrôle de tubes cintrés, cette sonde étant destinée à être introduite dans un tube à contrôler et comportant un câble pourvu de conducteurs électriques et une tête de sonde qui est fixée à une extrémité du câble et qui comprend une tête de contrôle comportant des moyens d'émission-réception de signaux de contrôle du tube, cette sonde étant caractérisée en ce que la tête de sonde comprend en outre :
- un support sur lequel la tête de contrôle est montée tournante,
- un moteur destiné à entraîner en rotation la tête de contrôle,
- un codeur qui est associé au moteur et prévu pour la détermination de l'étendue circonférentielle des défauts que le tube est susceptible de comporter, et
- un collecteur tournant qui est disposé entre le moteur et le support et qui est prévu pour assurer une liaison mécanique entre le moteur et la tête de contrôle ainsi que la transmission de signaux électriques de commande des moyens d'émission-réception et de signaux électriques fournis par ces derniers,
en ce que des liaisons mécaniques articulées sont prévues respectivement entre le moteur et le collecteur tournant et entre ce collecteur tournant et la tête de contrôle et en ce que la sonde comprend en outre une gaine souple en flexion et rigide en torsion qui rend solidaires les uns des autres ledit support, le stator du moteur et le stator du collecteur tournant et empêche des déplacements circonférentiels relatifs de ceux-ci.

Il est ainsi possible de localiser précisément les défauts des tubes dans le sens circonférentiel puisque la gaine rend solidaires le support, le stator du moteur et celui du collecteur. Sans la gaine, ces derniers seraient mécaniquement découplés les uns des autres et subiraient des déplacements circonférentiels relatifs, d'où des imprécisions sur la localisation des défauts, rendant inutilisables les logiciels de traitement de signal.

D'autre part ces déplacements relatifs seraient susceptibles d'endommager, et même de sectionner, les fils électriques joignant le câble au stator du collecteur tournant, et véhiculant les signaux de mesure.

Il faut noter que la gaine utilisée dans la présente invention est très différente d'un soufflet qui est aussi souple en flexion et rigide en torsion mais dont l'encombrement est important ; un soufflet est d'autre part très difficile à solidariser de manière étanche avec les stators du moteur et du collecteur ; enfin il empêche l'accès indispensable aux organes qui lui sont intérieurs (fils électriques) cardans, ...).

Certes, on connaît par le document EP-A-0 301 906 (Westinghouse Electric Corporation) une sonde de contrôle de tubes comprenant trois éléments, à savoir un moteur, un collecteur tournant et un support de traducteurs ultrasonores, dont les stators respectifs sont rendus solidaires à l'aide d'un carter rigide. Cependant cette rigidité du carter empêche le passage de tubes cintrés.

Au contraire, selon l'invention, on peut passer dans des tubes dont le rayon de courbure est de l'ordre de 5 fois le diamètre moyen des tubes.

Dans la sonde objet de l'invention, l'ensemble de la tête de contrôle est rotatif ; aucun support matériel ne vient occulter les signaux issus des moyens d'émission-réception et il n'y a aucune zone morte.

On connaît aussi, par EP-A-0 255 619 (PIPETRONIX GMBH), un dispositif de contrôle non destructif de canalisations. Ce dispositif comprend un premier module qui contient une source d'énergie pour l'alimentation du dispositif, un module qui contient des moyens de traitement et d'enregistrement et un module qui contient des moyens électroniques de contrôle. De plus, la périphérie du premier module porte des capteurs qui sont utilisés pour le contrôle non destructif.

Selon un mode de réalisation particulier de la sonde objet de l'invention, les moyens d'émission-réception comprennent un traducteur émetteur-récepteur d'ultrasons et des moyens de réflexion des ultrasons, qui sont disposés en regard du traducteur, sont rigidement solidaires de celui-ci et sont prévus pour réfléchir les ultrasons émis par le traducteur vers le tube et pour réfléchir vers ce traducteur les ultrasons issus du tube.

Dans ce mode de réalisation particulier, le traducteur et les moyens de réflexion des ultrasons forment un ensemble rigide, ce qui supprime les effets d'inhomogénéité du faisceau ultrasonore émis par le traducteur, effets qui se produisent dans la sonde du document (4) à cause des inhomogénéités de ses traducteurs ultrasonores.

Le mouvement de rotation du moteur est transmis à cet ensemble rigide par l'intermédiaire du collecteur tournant.

On voit qu'aucun support matériel ne vient occulter le faisceau ultrasonore issu des moyens de réflexion des ultrasons et que les zones mortes sont donc éliminées.

De plus, l'utilisation de moyens de réflexion des ultrasons dans la présente invention permet d'utiliser un traducteur émetteur-récepteur d'ultrasons de plus grandes dimensions et de l'éloigner de la paroi interne d'un tube à contrôler. On effectue ainsi un contrôle dont la qualité est meilleure que celle des contrôles effectués avec des sondes ne comportant pas de tels moyens de réflexion des ultrasons. Dans ces sondes, le traducteur est placé trop près de la paroi interne du tube et ses dimensions sont trop réduites, ce qui nuit à la qualité du contrôle.

Un avantage de la présente invention réside dans la possibilité de remplacer la tête de contrôle ultrasonore, comportant le traducteur et les moyens de réflexion des ultrasons, par une tête de contrôle par courants de Foucault.

Dans ce cas, les moyens d'émission-réception comprennent un bobinage émetteur-récepteur prévu pour un contrôle du tube par courants de Foucault.

La tête de sonde peut comprendre en outre un bobinage auxiliaire prévu pour mettre en évidence par courants de Foucault des discontinuités du tube ou de son environnement et permettre ainsi le repérage de la position de la tête de contrôle dans le tube.

Ceci permet d'établir une "carte" des défauts.

La sonde peut être déplacée dans le tube au moyen d'un courant d'eau.

Dans le cas d'un contrôle ultrasonore, cette eau peut constituer aussi le milieu de couplage entre le traducteur ultrasonore, les moyens de réflexion d'ultrasons associés à ce traducteur et la paroi interne du tube.

On dispose alors d'une sonde de contrôle par ultrasons qui est plus simple que la sonde commercialisée par la société NUCON (voir le document (4)).

En effet, pour cette dernière sonde, la propulsion est pneumatique et le liquide de couplage entre chaque traducteur ultrasonore, les moyens de réflexion des ultrasons correspondants et la paroi interne d'un tube à contrôler est transporté, de l'extérieur du tube à contrôler vers le traducteur, par une canalisation disposée à l'intérieur du câble qui raccorde les deux têtes de la sonde à des moyens de commande extérieurs au tube à contrôler.

La gaine utilisée dans l'invention peut être en outre électriquement isolante et étanche et emprisonner au moins la partie de la tête de sonde allant du moteur au support sur lequel la tête de contrôle est montée tournante.

Une telle gaine est particulièrement intéressante dans le cas où la sonde objet de l'invention est déplacée dans le tube au moyen d'un courant d'eau car elle assure alors l'isolation électrique des organes permettant la rotation de la tête de contrôle vis-à-vis de leur environnement.

Cette gaine peut être faite en matière élastomère et formée sur un support tressé. Cette matière élastomère peut être le silicone.

Enfin, chacune des liaisons mécaniques entre le moteur et le collecteur tournant et entre ce dernier et la tête de contrôle peut comprendre un joint homocinétique, par exemple un joint de Cardan.

La présente invention sera mieux comprise à la lecture de la description d'exemples de réalisation donnés ci-après à titre purement indicatif et nullement limitatif, en référence aux dessins annexés sur lesquels :
- la figure 1 est une vue schématique d'un mode de réalisation particulier de la sonde objet de l'invention, permettant un contrôle de tubes cintrés par ultrasons,
- la figure 2 est une vue en coupe qui illustre schématiquement la tête de contrôle que comporte la sonde représentée sur la figure 1, et
- la figure 3 est une vue en coupe qui illustre schématiquement et partiellement un autre mode de réalisation particulier de la sonde objet de l'invention, permettant un contrôle de tubes cintrés par courants de Foucault.

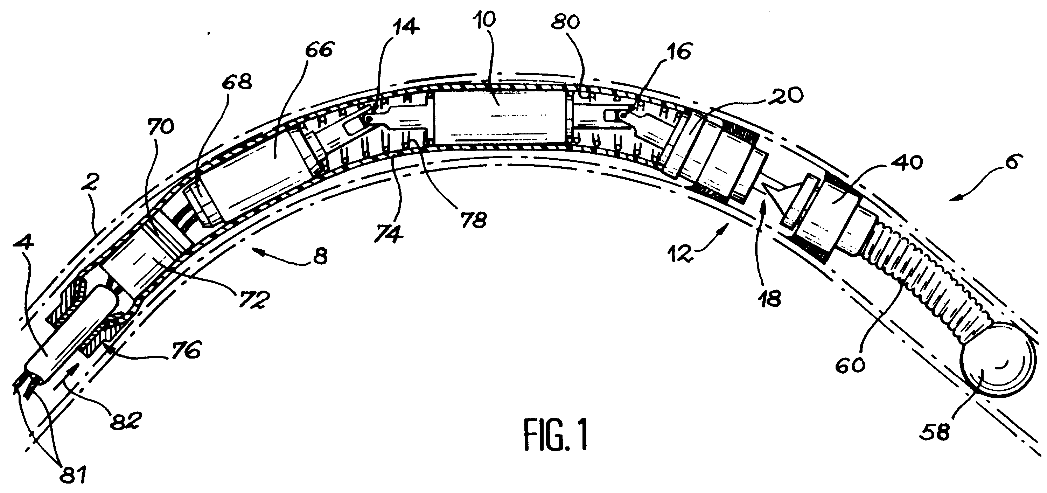

La sonde conforme à l'invention, qui est schématiquement représentée sur la figure 1, est destinée au contrôle ultrasonore de tubes cintrés.

Elle est conçue de façon à pouvoir être introduite dans ces tubes cintrés, tels que le tube 2 de la figure 1, et comprend un câble 4 et une tête de sonde 6 qui est fixée à une extrémité du câble 4.

La tête de sonde 6 comprend trois modules articulés 8, 10 et 12, les modules 8 et 10 étant réunis par un joint de Cardan 14 tandis que les modules 10 et 12 sont réunis par un joint de Cardan 16.

Le module 10 est compris entre les modules 8 et 12, le module 12 étant celui qui est introduit le premier dans le tube 2.

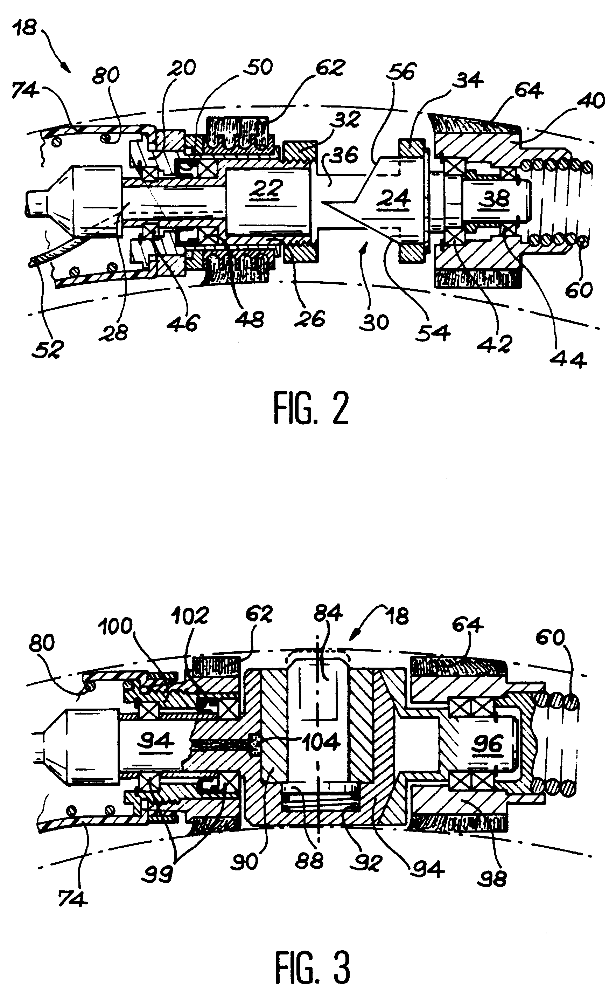

Ce module 12 comprend une tête de contrôle 18, qui est représentée de façon plus détaillée sur la figure 2, ainsi qu'un support 20 sur lequel la tête de contrôle est montée tournante.

Cette tête de contrôle 18 comporte un traducteur ultrasonore émetteur-récepteur 22 et un miroir 24 apte à réfléchir les ultrasons, qui est disposé en regard du traducteur 22 et qui forme un ensemble rigide avec celui-ci.

Plus précisément, le traducteur 22 est fixé de façon étanche, par collage par exemple, dans un logement réalisé dans un étui 26.

L'étanchéité requise est une étanchéité à l'eau qui, dans l'exemple représenté, sert à la propulsion de la sonde dans le tube 2 et au couplage entre le traducteur, le miroir et la paroi interne du tube à contrôler.

Bien entendu, la face active du traducteur, face destinée à l'émission et à la réception d'ultrasons, donne sur l'extérieur de l'étui 26.

Un axe tournant 28, qui constitue l'axe de rotation de la tête de contrôle, est fixé, d'un côté, au joint de Cardan 16 et, de l'autre, dans un perçage réalisé dans l'étui 26, ce perçage prolongeant le logement du traducteur.

Le miroir 24 est fixé à un porte-miroir 30 comportant deux bagues coaxiales 32 et 34 reliées par deux pattes 36 parallèles à l'axe 28, les bagues 32, 34 et cet axe 28 étant coaxiaux.

La bague 32 est fixée sur la périphérie de l'étui 26, du côté du miroir 24 et la bague 34 est fixée sur la périphérie du miroir 24.

Un axe 38, rigidement solidaire de la bague 34, est aligné avec l'axe 28 et constitue un prolongement de celui-ci.

L'axe 38 est monté tournant dans un corps 40 par l'intermédiaire de deux roulements à billes 42 et 44.

L'étui 26 est monté tournant dans le support 20 par l'intermédiaire de deux roulements à billes 46 et 48.

Un joint dynamique 50, étanche à l'eau, est prévu entre le support 20 et l'étui 26.

Une liaison électrique 52, destinée à transmettre des signaux de commande du traducteur et les signaux de contrôle fourni par ce dernier, traverse l'étui 26 pour ressortir du côté du joint de Cardan 16.

Le miroir 24 envoie vers la paroi interne du tube 2 les ultrasons émis par le traducteur 22 et réfléchit vers ce dernier les ultrasons qui reviennent alors du tube.

Dans l'exemple représenté, le miroir comporte deux facettes 54 et 56 qui envoient les ultrasons émis par le traducteur respectivement vers l'avant et vers l'arrière, afin de contrôler des défauts circonférentiels de peau interne au voisinage des soudures (non représentées) du tube 2 au moyen d'ondes de Rayleigh.

Les deux facettes 54 et 56 permettent d'examiner les deux côtés d'une soudure suivant la position de la sonde (le faisceau ultrasonore issu du traducteur ne traversant pas un cordon de soudure).

On voit sur la figure 1 que le module 12 comprend aussi une boule 58 de centrage de la tête de sonde dans le tube 2, cette boule 58 étant fixée au corps 40 par l'intermédiaire d'un ressort hélicoïdal 60.

On voit sur la figure 2 que le module 12 est également muni de moyens 62, 64 de centrage de la tête de contrôle dans le tube 2.

Ces moyens 62 et 64 peuvent être des patins élastiques ou des brosses et sont respectivement fixés à la périphérie du support 20 et à la périphérie du corps 40.

Le module 10 de la tête de sonde est un collecteur tournant tandis que le module 8 comprend successivement, en allant du joint de Cardan 14 vers le câble 4, un moteur 66 muni d'un réducteur non représenté, un codeur 68, une bobine 70 et des moyens électroniques 72 destinés à la préamplification des signaux de contrôle fournis par le traducteur 22 et à l'excitation de ce dernier (grâce à des signaux de commande issus de moyens appropriés, extérieurs au tube 2).

Le collecteur tournant 10 assure la transmission du mouvement de rotation du moteur 66 à la tête de contrôle 18 ainsi que la liaison électrique entre le traducteur 22 et les moyens électroniques associés 72 (excitation du traducteur et retour des signaux de contrôle issus de celui-ci).

Ce collecteur tournant 10 est par exemple celui qui est commercialisé par la société MORS sous l'appellation "contact tournant en capsule" et qui comporte un stator et un rotor dont l'arbre débouche des deux côtés du stator, les deux extrémités de cet arbre étant respectivement reliées aux joints de Cardan 14 et 16.

La rotation du moteur 66 est ainsi transmise à la tête de contrôle par l'intermédiaire du joint de Cardan 14, du rotor du collecteur tournant 10, du joint de Cardan 16 et de l'axe tournant 28.

Le moteur 66 est par exemple un micromoteur à courant continu.

Le codeur 68, dont est muni le moteur 66, est par exemple un codeur optique.

Il permet l'asservissement te la vitesse de rotation du moteur et donc de la tête de contrôle ainsi que la détermination de l'étendue circonférentielle des défauts susceptibles d'être observés dans le tube grâce aux ultrasons.

Les moyens électroniques 72, qui sont solidaires du traducteur 22 par une liaison électrique, sont également solidaires de la bobine 70 qui est prévue pour mettre en évidence, par courants de Foucault, des organes associés au tube 2 (par exemple des peignes et des cavaliers de maintien de ce tube 2) ainsi que des bourrelets de soudure tu tube, ce qui permet, en association avec un codeur millimétrique tel que celui qui est décrit au document (2), de déterminer avec précision la position du traducteur 22 dans le tube 2 lorsque la tête de sonde a été amenée dans ce dernier jusqu'à une certaine distance (par exemple 100 m) de l'extrémité du tube par laquelle la sonde a été introduite.

Une liaison électrique est prévue dans le câble 4 pour l'alimentation de la bobine 70 en courant alternatif et pour la transmission à des moyens de traitement appropriés, extérieurs au tube 2, des signaux issus de la bobine 70.

La sonde représentée sur la figure 1 comprend également une gaine 74 souple en flexion et rigide en torsion qui, dans l'exemple représenté, est en outre étanche à l'eau et électriquement isolante.

Il s'agit par exemple d'une gaine en silicone formée sur un support tressé.

La gaine 74 emprisonne la partie de la tête de sonde allant des moyens électroniques 72 jusqu'au support 20.

Une extrémité de la gaine 74 est fixée de façon étanche, par des moyens appropriés 76, à la périphérie de l'extrémité du câble 4 qui est la plus proche de la tête de sonde.

Les moyens 76 de fixation de la gaine comprennent par exemple un manchon intérieur qui emprisonne cette extrémité du câble et un manchon extérieur, l'extrémité de la gaine étant emprisonnée entre ces deux manchons.

L'autre extrémité de la gaine est fixée de façon étanche à la périphérie du support 20 (figure 2).

Le joint dynamique 50 empêche l'eau de pénétrer dans la gaine 74.

Cette gaine 74 assure l'isolation électrique des organes (moteur 66, codeur 68, bobine 70, moyens électroniques 72, collecteur tournant 10) qu'elle contient, dans le cas considéré de la propulsion de la sonde par de l'eau.

La gaine 74 permet également le déplacement de la tête de sonde dans le tube 2 lorsqu'on tire sur le câble 4.

Des ressorts hélicoïdaux 78 et 80 sont placés dans la gaine 74 et entourent respectivement les joints de Cardan 14 et 16.

Ces ressorts 78 et 80 sont prévus pour empêcher un écrasement de la gaine au niveau des joints de Cardan, ce qui endommagerait la gaine lors de la mise en pression hydraulique du tube 2.

Le câble 4 dépasse constamment de l'extrémité du tube par laquelle la tête de sonde a été introduite, sert éventuellement de câble de traction pour retirer cette tête de sonde du tube et assure aussi les diverses liaisons électriques nécessaires au fonctionnement de la sonde représentée sur la figure 1 : transmission des signaux d'activation du moteur 66, du traducteur 22 (par l'intermédiaire des moyens électroniques 72) et de la bobine 70, et des signaux issus du traducteur 22 (par l'intermédiaire des moyens électroniques 72), de la bobine 70 et du codeur 68.

Le câble 4 est un câble composite comportant une fibre centrale en Kevlar (marque déposée) non représentée et des conducteurs électriques 81 permettant les diverses liaisons électriques mentionnées plus haut.

Des boules non représentées, moulées sur le câble 4, permettent le centrage de ce dernier dans le tube 2, la diminution du frottement contre la paroi interne du tube 2 et une répartition uniforme de la poussée exercée par l'eau lors de l'introduction de la sonde.

Elles sont analogues aux "flotteurs" 76 décrits dans le document (2) précité.

Des moyens de commande et de traitement non représentés, extérieurs au tube 2, permettent l'utilisation de la sonde représentée sur la figure 1 et notamment l'introduction de cette sonde dans le tube 2 grâce à un courant d'eau 82, le retrait de la sonde, la commande du moteur 66, la commande du traducteur 22, le traitement des signaux reçus de la tête de sonde et en particulier du traducteur.

La tête 18 de contrôle par ultrasons, qui est représentée sur la figure 2, peut être remplacée par toute autre tête de contrôle comportant un capteur à mesure radiale, en particulier par une tête 18 de contrôle par courants de Foucault, comme le montre schématiquement la figure 3.

On voit sur cette figure 3 un bobinage 84 de mesure par courants de Foucault, ce bobinage étant monté sur une pièce 88 logée dans un porte-bobine 90.

Un ressort 92 comprimé entre le fond du porte-bobine 90 et le fond de la pièce 88 permet d'immobiliser cette dernière dans le porte-bobine en plaquant un épaulement périphérique de la pièce 88 contre un épaulement interne du porte-bobine 90.

Un côté de ce dernier est raccordé à un axe tournant 94, homologue de l'axe 28 de la figure 2, tandis que l'autre côté du porte-bobine 90 est raccordé à un autre axe 96 qui est aligné avec l'axe 94 et qui est homologue de l'axe 38 de la figure 2.

Cet axe 96 est monté tournant dans un corps 98 par l'intermédiaire de roulements à billes 97.

Le corps 98 est prolongé par un ressort hélicoïdal 60 qui est terminé par une boule de centrage non représentée.

L'axe 94 est monté tournant, par l'intermédiaire de roulements à billes 99, dans un support 100 homologue du support 20 de la figure 2.

L'axe du bobinage 84 est perpendiculaire à l'axe de rotation de la tête de contrôle 18, défini par l'axe tournant 94.

Le support 100 et le corps 98 sont munis, sur leur périphérie, de moyens de centrage du genre des moyens 62 et 64 de la figure 2.

Bien entendu, l'axe 94 est raccordé au joint de Cardan 16 (figure 1).

Dans la sonde partiellement représentée sur la figure 3, on utilise encore une gaine souple en flexion et rigide en torsion qui est du genre de la gaine 74 de la figure 1, dont une extrémité est fixée de façon étanche à la périphérie du support 100 et qui permet encore l'isolation électrique des organes disposés à l'intérieur de cette gaine (moteur et collecteur tournant notamment).

Un joint dynamique 102, étanche à l'eau, est prévu entre l'axe 94 et le support 100.

Bien entendu, des liaisons électriques sont prévues pour l'excitation du bobinage 84 et pour la transmission des signaux fournis par celui-ci, le tout encore par l'intermédiaire du collecteur tournant 10 de la tête de sonde (figure 1).

De plus, comme on le voit sur la figure 3, l'axe 94 comporte un passage axial pour ces liaisons électriques.

Ce passage axial est obturé de façon étanche par exemple au moyen d'une résine étanche 104 coulée dans ce passage.

## Revendications

1. Sonde de contrôle de tubes cintrés, cette sonde étant destinée à être introduite dans un tube (2) à contrôler et comportant un câble (4) pourvu de conducteurs électriques (81) et une tête de sonde (6) qui est fixée à une extrémité du câble (4) et qui comprend une tête de contrôle (18) comportant des moyens (22-24, 84) d'émission-réception de signaux de contrôle du tube (2), la tête de sonde (6) comprenant en outre :
- un support (20, 100) sur lequel la tête de contrôle (18) est montée tournante,
- un moteur (66) destiné à entraîner en rotation la tête de contrôle (18),
- un codeur (68) qui est associé au moteur (66) et prévu pour la détermination de l'étendue circonférentielle des défauts que le tube (2) est susceptible de comporter, et
- un collecteur tournant (10) qui est disposé entre le moteur (66) et le support (20, 100) et qui est prévu pour assurer une liaison mécanique entre le moteur et la tête de contrôle ainsi que la transmission de signaux électriques de commande des moyens d'émission-réception (22-24, 84) et de signaux électriques fournis par ces derniers,
en ce que des liaisons mécaniques articulées (14, 16) sont prévues respectivement entre le moteur (66) et le collecteur tournant (10) et entre ce collecteur tournant et la tête de contrôle (18) et en ce que la sonde comprend en outre une gaine souple en flexion et rigide en torsion qui rend solidaires les uns des autres ledit support, le stator du moteur et le stator du collecteur tournant, empêchant ainsi des déplacements circonférentiels relatifs de ceux-ci.

2. Sonde selon la revendication 1, caractérisée en ce que les moyens d'émission-réception comprennent un traducteur émetteur-récepteur d'ultrasons (22) et des moyens (24) de réflexion des ultrasons, qui sont disposés en regard du traducteur (22), sont rigidement solidaires de celui-ci et sont prévus pour réfléchir les ultrasons émis par le traducteur (22) vers le tube (2) et pour réfléchir vers ce traducteur les ultrasons issus du tube.

3. Sonde selon la revendication 1, caractérisée en ce que les moyens d'émission-réception comprennent un bobinage émetteur-récepteur (84) prévu pour un contrôle du tube (2) par courants de Foucault.

4. Sonde selon l'une quelconque des revendications 1 à 3, caractérisée en ce que la tête de sonde (6) comprend en outre un bobinage auxiliaire (70) prévu pour mettre en évidence par courants de Foucault des discontinuités du tube (2) ou de son environnement et permettre ainsi le repérage de la position de la tête de contrôle (18) dans le tube.

5. Sonde selon l'une quelconque des revendications 1 à 4, caractérisée en ce qu'elle est déplacée dans le tube (2) au moyen d'un courant d'eau (82).

6. Sonde selon la revendication 2, caractérisée en ce qu'elle est déplacée dans le tube (2) au moyen d'un courant d'eau (82) et en ce que le traducteur (22), les moyens de réflexion (24) et la paroi interne du tube (2) sont couplés par l'eau.

7. Sonde selon l'une quelconque des revendications 1 à 6, caractérisée en ce que la gaine (74) est en outre électriquement isolante et étanche et emprisonne au moins la partie de la tête de sonde allant du moteur (66) au support (20, 100) sur lequel la tête de contrôle est montée tournante.

8. Sonde selon l'une quelconque des revendications 1 à 7, caractérisée en ce que la gaine est en matière élastomère et formée sur un support tressé.

9. Sonde selon la revendication 8, caractérisée en ce que la matière élastomère est le silicone.

10. Sonde selon l'une quelconque des revendications 1 à 9, caractérisée en ce que chacune des liaisons mécaniques entre le moteur (66) et le collecteur tournant (10) et entre ce dernier et la tête de contrôle (18) comprend un joint homocinétique (14, 16).

## Patentansprüche

1. Sonde zum Prüfen gebogener Röhren, wobei diese Sonde, die dazu bestimmt ist, in eine zu prüfende Röhre (2) eingeführt zu werden, ein Kabel (4) umfaßt, versehen mit elektrischen Leitern (81), und einen Sondenkopf (6), der an einem Ende des Kabels (4) befestigt ist und der einen Steuerkopf (18) umfaßt, der Einrichtungen (22-24, 84) zum Senden-Empfangen von Prüfsignalen der Röhre (2) enthält, wobei der Sondenkopf (6) außerdem umfaßt:
- einen Träger (20, 100), auf den der Steuerkopf (18) montiert ist,
- einen Motor (66) für den Drehbewegungsantrieb des Steuerkopfs (18),
- einen Codierer (68), dem Motor (66) zugeordnet und vorgesehen zur Bestimmung des Umfangsausmaßes der Fehler, die die Röhre (2) aufweisen kann, und
- einen drehbaren Sammler (10), angeordnet zwischen dem Motor (66) und dem Träger (20, 100), vorgesehen zur Herstellung einer mechanischen Verbindung zwischen dem Motor und dem Steuerkopf sowie zur Übertragung der elektrischen Steuersignale der Sende-Empfangseinrichtungen (22-24, 84) und der durch diese letzteren gelieferten Signale,
und gelenkige mechanische Verbindungen (14, 16) jeweils zwischen dem Motor (66) und dem drehbaren Sammler (10) und zwischen dem drehbaren Sammler und dem Steuerkopf (18) vorgesehen sind und die Sonde außerdem eine biegsame aber torsionssteife bzw. -starre Hülle umfaßt, die den genannten Träger, den Motorstator und den Stator des drehbaren Sammlers fest miteinander verbindet, derart Umfangsrelativbewegungen von diesen verhindernd.

2. Sonde nach Anspruch 1, dadurch gekennzeichnet, daß die Sende-Empfangseinrichtungen einen Ultraschall-Sende-Empfänger-Wandler (22) umfassen und Ultraschallreflexionseinrichtungen (24), die dem Wandler (22) gegenüberstehen, mit diesem starr verbunden sind und vorgesehen sind, um die aus der Röhre stammenden Ultraschallwellen in Richtung dieses Wandlers zu reflektieren.

3. Sonde nach Anspruch 1, dadurch gekennzeichnet, daß die Sende-Empfangseinrichtungen eine Sender-Empfänger-Wicklung (84) umfassen, vorgesehen für eine Prüfung der Röhre (2) durch Wirbelströme.

4. Sonde nach einem der Ansprüche 1 bis 3, dadurch gekennzeichnet, daß der Sondenkopf (6) außerdem eine Hilfswicklung (70) umfaßt, vorgesehen um durch Wirbelströme Diskontinuitäten der Röhre (2) oder ihrer Umgebung festzustellen und so die Ortung der Position des Steuerkopfes (18) in der Röhree zu ermöglichen.

5. Sonde nach einem der Ansprüche 1 bis 4, dadurch gekennzeichnet, daß sie in der Röhre (2) durch eine Wasserströmung (82) verschoben wird.

6. Sonde nach Anspruch 2, dadurch gekennzeichnet, daß sie in Röhre (2) durch eine Wasserströmung (82) verschoben wird, und dadurch, daß der Wandler (22), die Reflexionseinrichtungen (24) und die Innenwand der Röhre (2) durch das Wasser gekoppelt sind.

7. Sonde nach einem der Ansprüche 1 bis 6, dadurch gekennzeichnet, daß die Hülle (74) außerdem elektrisch isolierend und dicht ist und wenigstens den Teil des Sondenkopfes umschließt, der vom Motor (66) bis zu dem Träger (20, 100) reicht, in dem der Steuerkopf drehbar montiert ist.

8. Sonde nach einem der Ansprüche 1 bis 7, dadurch gekennzeichnet, daß die Hülle aus Elastomermaterial ist und auf einem geflochtenen Träger gebildet ist.

9. Sonde nach Anspruch 8, dadurch gekennzeichnet, daß das Elastomermaterial Silikon ist.

10. Sonde nach einem der Ansprüche 1 bis 9, dadurch gekennzeichnet, daß jede der mechanischen Verbindungen zwischen dem Motor (66) und dem drehbaren Sammler (10) und zwischen letzterem und dem Steuerkopf (18) ein Gleichlaufgelenk (14, 16) umfaßt.

## Claims

1. Bent tube inspection probe, which is introduced into a tube (2) to be inspected and has a cable (4) provided with electrical conductors (81) and a probe head (6) fixed to one end of the cable (4) and which has an inspection head (18) with transmission-reception means (22-24, 84) for inspection signals for tube (2), said probe head (6) also comprising a support (20, 100) on which the inspection head (18) is mounted in rotary manner, a motor (66) for rotating the inspection head (18), an encoder (68) associated with the motor (66) and serving to determine the circumferential extension of faults which the tube (2) may have and a rotary collector (10) positioned between the motor (66) and the support (20, 100) and which ensures a mechanical connection between the motor and the inspection head, as well as the transmission of electrical control signals for the transmission-reception means (22-24, 84) and electrical signals supplied by the latter and in that articulated mechanical connections (14, 16) are provided respectively between the motor (66) and the rotary collector (10) and between the rotary collector and the inspection head (18) and in that the probe also comprises a sheath which is flexible in flexion and rigid in torsion and which joins together the said support, the stator of the motor and the stator of the rotary collector thus preventing relative circumferential displacements thereof.

2. Probe according to claim 1, characterized in that the transmission-reception means comprise an ultrasonic transmitting/receiving transducer (22) and ultrasonic reflection means (24), which are positioned facing the transducer (22), are rigidly integral therewith and serve to reflect the ultrasonics emitted by the transducer (22) towards the tube (2) and for reflecting to the transducer the ultrasonics from the tube.

3. Probe according to claim 1, characterized in that the transmission-reception means comprise a transmitting-receiving coil (84) for an inspection of the tube (2) by eddy currents.

4. Probe according to any one of the claims 1 to 3, characterized in that the probe head (6) also comprises an auxiliary coil (70) for revealing by eddy currents breaks in the tube (2) or its environment, thus permitting the identification of the position of the inspection head (18) in the tube.

5. Probe according to any one of the claims 1 to 4, characterized in that it is displaced in the tube (2) by means of a water flow (82).

6. Probe according to claim 2, characterized in that it is displaced in the tube (2) by means of a water flow (820 and in that the transducer (22), the reflection means (24) and the inner wall of the tube (2) are coupled by the water.

7. Probe according to any one of the claims 1 to 6, characterized in that the sheath (74) is also electrically insulating and tight and traps at least that part of the probe head from the motor (66) to the support (20, 100) on which the inspection head is mounted in rotary manner.

8. Probe according to any one of the claims 1 to 7, characterized in that the sheath is made from elastomeric material and formed on a braided support.

9. Probe according to claim 8, characterized in that the elastomeric material is silicone.

10. Probe according to any one of the claims 1 to 9, characterized in that each of the mechanical connections between the motor (66) and the rotary collector (10) and between the latter and the inspection head (18) comprises a homokinetic joint (14, 16).
